# EUROPÄISCHE PATENTANMELDUNG

(11) **EP 0 561 366 A1**
(43) Veröffentlichungstag der Anmeldung: **22.09.1993**
(21) Anmeldenummer: 93104311.1
(22) Anmeldetag: 17.03.1993
(51) Int. Cl.: B62D 61/12

(54) **Achsanhebevorrichtung**

(30) Priorität: 20.03.1992 DE 4209038
(71) Anmelder: BPW Bergische Achsen Kommanditgesellschaft, D-51674 Wiehl (DE)
(72) Erfinder: Michels, Burchard, Dipl.-Ing., W-5203 Much (DE); Adolfs, Manfred, Dipl.-Ing., W-5275 Bergneustadt (DE)
(74) Vertreter: Stenger, Watzke & Ring Patentanwälte

(57) **Zusammenfassung**

Gegenstand der Erfindung ist eine Achsanhebevorrichtung für Luftfederachsen mit Stoßdämpfern (18) für Anhänger. Um eine kompakte Achsanhebevorrichtung die nur weniger neuer Bauteile bedarf und darüber hinaus über die am Anhänger vorhandene Druckluftanlage betrieben werden kann zu schaffen, wird vorgeschlagen, daß wenigstens ein Stoßdämpfer (18) hydraulisch längenverstellbar ausgebildet und mit einem Dämpfersteuerventil (32) versehen ist.

## Beschreibung

Gegenstand der Erfindung ist eine Achsanhebevorrichtung für Luftfederachsen mit Stoßdämpfern für Anhänger.

Aus der EP-PS 0 120 332 ist eine Achsanhebevorrichtung für eine luftgefederte Achse mit einem den Achskörper untergreifenden, L-förmig ausgebildeten Hebel bekannt. Diese bekannte Achsanhebevorrichtung erlaubt zwar ein zuverlässiges Anheben der Fahrzeugachse, jedoch bedarf diese Vorrichtung vieler spezieller Bauteile, die nur der Anhebung dieser Achse dienen.

Davon ausgehend liegt der Erfindung die **Aufgabe** zugrunde, eine kompakte Achsanhebevorrichtung zu schaffen, die nur weniger neuer Bauteile bedarf und über die am Anhänger vorhandene Druckluftanlage betrieben werden kann.

Als technische **Lösung** wird vorgeschlagen, daß wenigstens ein Stoßdämpfer hydraulisch längenverstellbar ausgebildet und mit einem Dämpfersteuerventil versehen ist.

Bei einer praktischen Ausführungsform erfolgt die Versorgung des Stoßdämpfers mit der Hydraulikflüssigkeit über eine Hydraulik-Pumpe, die vorzugsweise pneumatisch angetrieben wird. Zum Umschalten des Stoßdämpfers vom Normalbetrieb, d.h. der Schwingungsdämpfung auf den Hubbetrieb, wird zwischen Hydraulikpumpe und Dämpfersteuerventil ein Mehrwegeventil geschaltet, so daß mittels der in den Stoßdämpfer eingepumpten Hydraulikflüssigkeit der Stoßdämpfer verkürzt und somit die Achse angehoben werden kann.

Um die Achse im angehobenen Zustand fixieren zu können und somit auch die Hydraulikpumpe abstellen zu können, ist am Fahrzeugrahmen in der Mitte über der anzuhebenden Achse eine in Fahrzeuglängsrichtung schwenkbare Arretierungsvorrichtung vorgesehen. Diese Arretierungsvorrichtung besteht aus einem zweiarmigen, mittig gelagerten Hebel, dessen zur Achse weisender Schenkel hakenförmig ausgestaltet ist. Der andere, nach oben weisende Schenkel ist mit dem Fahrzeugrahmen über eine in diesen Schenkel eingehängte Schraubenfeder verbunden, die bewirkt, daß die Arretierungsvorrichtung immer wieder in die Ausgangslage zurückgestellt wird.

Unterhalb der Arretierungsvorrichtung ist an der anzuhebenden Achse ein U-förmiger Bügel mit der geschlossenen Seite nach oben weisend befestigt, in den im angehobenen Zustand der hakenförmig ausgebildete Schenkel der Arretierungsvorrichtung eingreift. Um die Arretierungsvorrichtung wieder lösen zu können, kann sie über eine mit einem vorzugsweise pneumatisch betriebenen Zylinder verbundene Kolbenstange soweit nach hinten geschwenkt werden, daß der hakenförmige Schenkel der Arretierungsvorrichtung den Bügel der anzuhebenden Achse wieder freigibt. Zur Verbindung der Kolbenstange mit der Arretierungsvorrichtung weist die Kolbenstange am freien Ende ein Langloch auf, in welches ein am oberen Schenkel der Arretierungsvorrichtung angeformter Zapfen eingreift.

Bei einer erfindungsgemäß ausgestalteten Achsanhebevorrichtung ist zwischen einem fahrzeugseitigen Druckluftvorrat auf der einen Seite und den Luftfederbälgen sowie dem Zylinder zum Schwenken der Arretierungsvorrichtung auf der anderen Seite ein Mehrwegeventil geschaltet, welches die Druckluftzufuhr zu den vorgenannten Bauteilen im jeweiligen Betriebszustand der anhebbaren Achse steuert.

Bei einer bevorzugten Ausführungsform werden sowohl die Hydraulikpumpe als auch die Luftfederbälge und der Zylinder zum Schwenken der Arretierungsvorrichtung von demselben Druckluftvorrat mit Druckluft versorgt, wobei diese beiden Druckluftsysteme über die beiden in diesen Druckluftsystemen enthaltenen Mehrwegeventile miteinander gekoppelt sind. Als Mehrwegeventile werden vorzugsweise 3/2-Wegeventile verwendet.

Eine nach dieser technischen Lehre ausgebildete Achsanhebevorrichtung hat den **Vorteil,** daß nahezu die gesamte Vorrichtung aus bereits an der Luftfederachse vorhandenen Bauteilen besteht und darüber hinaus die gesamte Vorrichtung über die vorhandene Druckluftanlage des Anhängers betrieben werden kann.

Weitere Einzelheiten und Vorteile des Gegenstandes der Erfindung ergeben sich aus der nachfolgenden Beschreibung der zugehörigen Zeichnungen, in denen zwei bevorzugte Ausführungsformen einer erfindungsgemäß ausgebildeten Achsanhebevorrichtung dargestellt sind. In den Zeichnungen zeigen:
- Fig. 1: eine abgesenkte Luftfederachse entlang der Linie I-I in Fig. 3 geschnitten in Seitenansicht;
- Fig. 2: dieselbe Luftfederachse im angehobenen Zustand entlang der Linie II-II in Fig. 3 geschnitten in Seitenansicht;
- Fig. 3: dieselbe Luftfederachse in Draufsicht;
- Fig. 4: ein Schaltschema für einen hydraulisch längenverstellbaren Stoßdämpfer;
- Fig. 5: ein Schaltschema für eine Luftfederanlage mit einem pneumatischen Zylinder;
- Fig. 6: ein Schaltschema für eine Luftfederanlage mit zwei hydraulisch längenverstellbaren Stoßdämpfern.

Die Luftfederachse hat einen Achskörper 1, der mit zwei Lenkerfedern 2 verbunden ist, wobei die Lenkerfedern 2 mit einem Lenkerlager 3 an Trägern 4 gelagert sind. Die Träger 4 sind unterhalb eines Fahrzeugrahmens 5 angeordnet und fest mit diesem verbunden. Der Achskörper ist beidseitig zwischen den Bereifungen 6 an den Lenkerfedern 2 gehalten.

Der Achskörper 1 und die Lenkerfedern 2 sind über Achslappen 7 sowie Federbügel 8 und Spannschrauben 9 miteinander verbunden. An der dem Fahrzeugrahmen 5 zugewandten Oberseite des Achskörpers 1 ist beidseitig eine Halterung 10 befestigt, die über einen Bolzen 11 schwenkbar mit einer Haltevorrichtung 12 verbunden ist. Die Haltevorrichtung 12 ist mit einem Luftfederbalgträger 13 verschraubt, der U-förmig ausgebildet ist und an seinen beiden freien Schenkeln jeweils einen Hebelarm 14a und 14b aufweist.

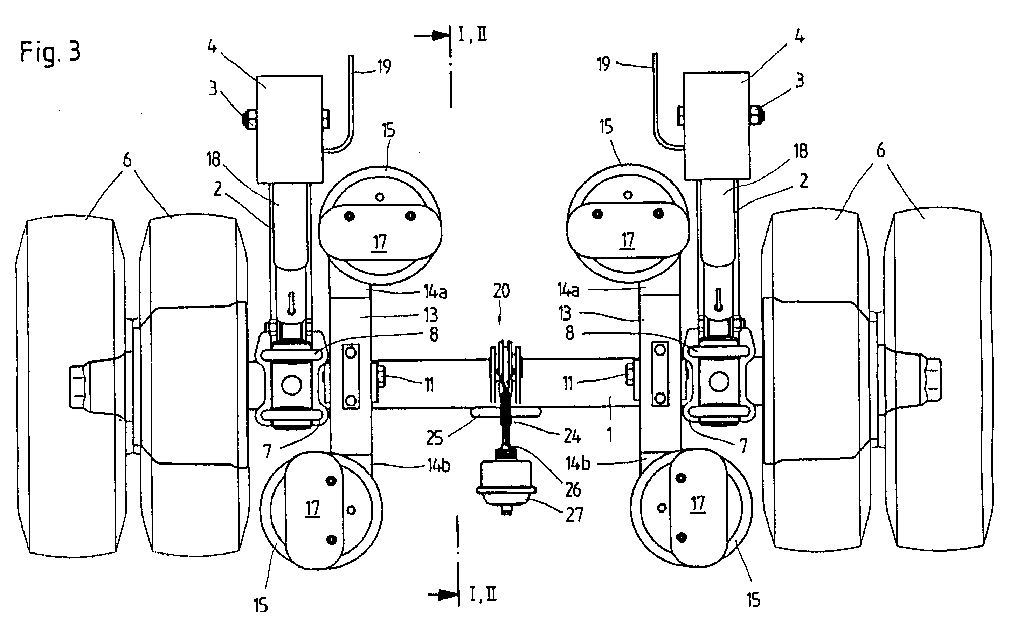

An den Hebelarmen 14a und 14b des Luftfederbalgträgers 13 sind zwei identische Luftfederbälge 15 mit Bodenplatten 16 abgestützt. Die Luftfederbälge 15 drücken mit Kopfplatten 17 gegen den Fahrzeugrahmen 5. Wie insbesondere aus Fig. 3 ersichtlich, sind die Luftfederbälge 15 in Längsrichtung des Fahrzeugrahmens 5 versetzt angeordnet.

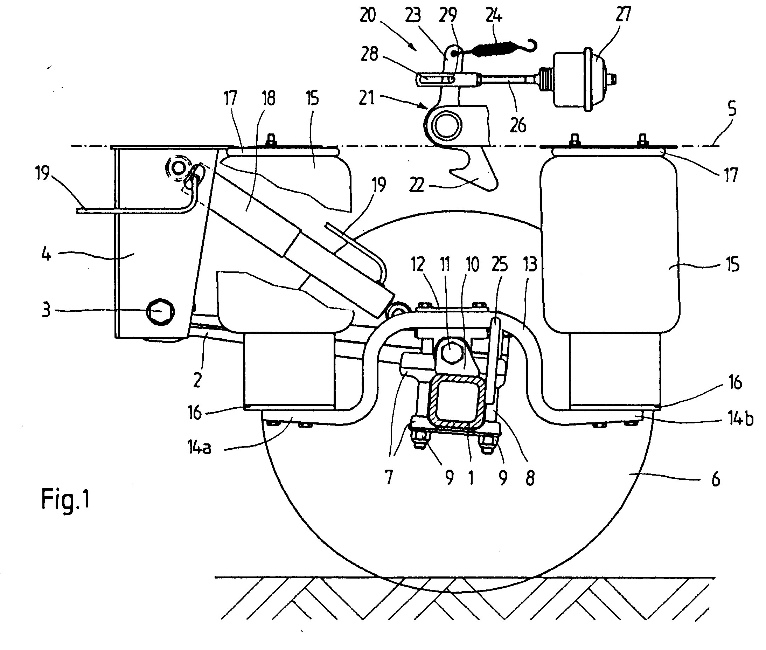

Wie aus Fig. 1 bis 3 ersichtlich, erfolgt die Federung der Luftfederachse über die Luftfederbälge 15 sowie Stoßdämpfer 18. Die Stoßdämpfer 18 sind zwischen dem Träger 4 und dem Achskörper 1 angeordnet und auf beiden Seiten schwenkbar gelagert. Die Stoßdämpfer 18 weisen an beiden Enden Anschlüsse 19 für die Zufuhr von Hydraulikflüssigkeit auf.

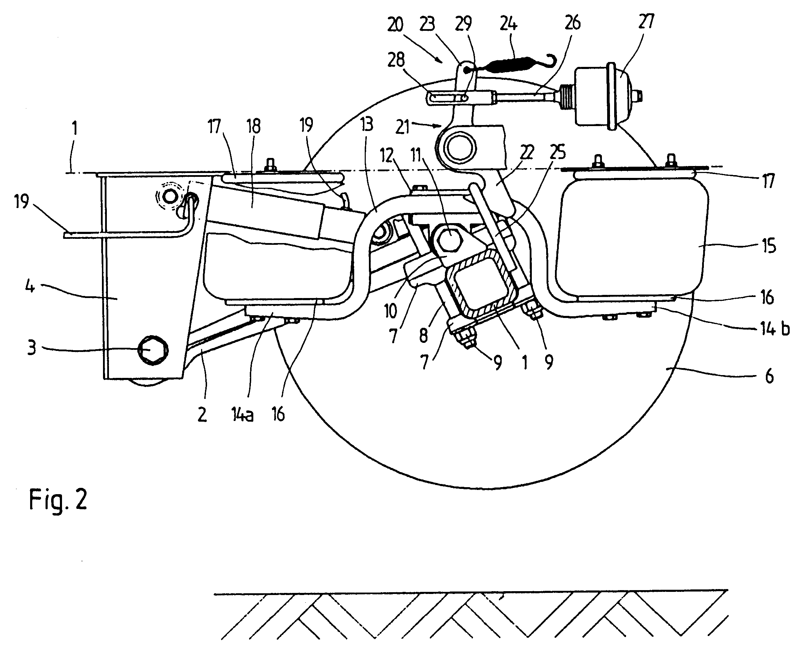

Wie insbesondere aus Fig. 3 entnommen werden kann, ist oberhalb des Achskörpers 1 in der Mitte des Fahrzeugrahmens 5 eine Arretierungsvorrichtung 20 angeordnet. Die in Fig. 1 und 2 in Seitenansicht dargestellte Arretierungsvorrichtung 20 besteht aus einem zweiarmigen, mittig gelagerten Hebel 21, dessen zum Achskörper 1 weisender Schenkel 22 hakenförmig ausgestaltet ist. Der andere, nach oben weisende Schenkel 23 ist über eine in diesen Schenkel 23 eingehängte Schraubenfeder 24 mit dem Fahrzeugrahmen 5 verbunden.

Am Achskörper 1 ist unterhalb der Arretierungsvorrichtung 20 ein U-förmiger Bügel 25 mit der geschlossenen Seite nach oben weisend befestigt. Im angehobenen Zustand der Luftfederachse greift der hakenförmig ausgestaltete Schenkel 22 der Arretierungsvorrichtung 20 in den Bügel 25 ein und fixiert den angehobenen Achskörper 1 in dieser Lage.

Um die Arretierung des Achskörpers 1 wieder lösen zu können, ist die Arretierungsvorrichtung 20 über eine Kolbenstange 26 mit einem Zylinder 27 verbunden. Zur Verbindung der Kolbenstange 26 mit dem Hebel 21 weist die Kolbenstange 26 an ihrem freien Ende ein Langloch 28 auf, in das ein an dem oberen Schenkel 23 des Hebels 21 angeformter Zapfen 29 eingreift.

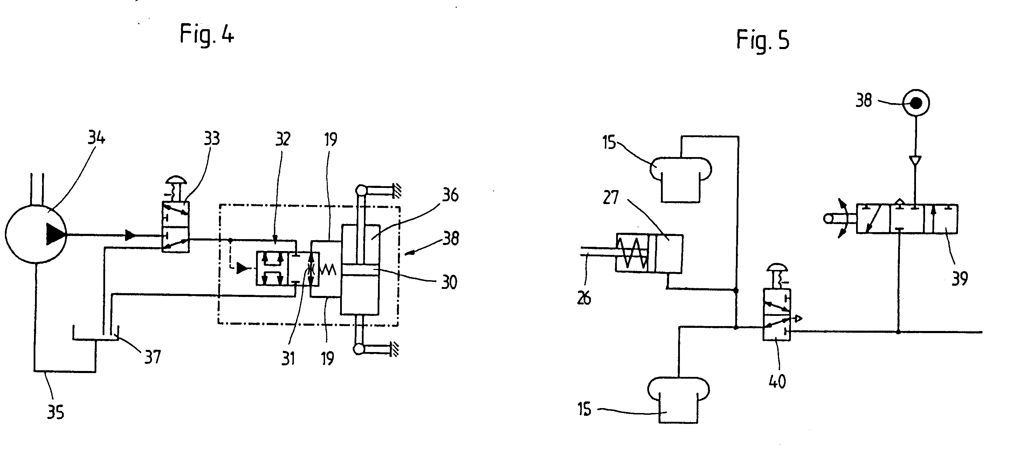

Das in Fig. 4 dargestellte Schaltschema für die hydraulisch längenverstellbaren Stoßdämpfer 18 funktioniert folgendermaßen:
Im Fahrbetrieb mit abgesenkter Luftfederachse sind Ober- und Unterseite eines Dämpferkolbens 30 über eine Drossel 31 eines Dämpfersteuerventils 32 miteinander verbunden, wobei die Drossel 31 die Dämpfung der auftretenden Schwingungen bewirkt, da sie den Fluß der Hydraulikflüssigkeit aufgrund des verengten Querschnitts in der Drossel 31 verzögert.

Durch Betätigung eines 3/2-Wegeventils 33 kann der von einer Hydraulikpumpe 34 erzeugte Öldruck auf das Dämpfersteuerventil 32 geschaltet werden. Die Hydraulikpumpe 34 kann dabei beliebig von einem Motor oder einer anderen Kraftquelle, vorzugsweise mit Druckluft, angetrieben werden. Die öldruckgesteuerte Umschaltung des Dämpfersteuerventils 32 bewirkt, daß Ober- und Unterseite des Dämpferkolbens 30 nicht mehr über die Drossel 31 verbunden sind, sondern nun mit einem Hydraulikkreislauf 35 der Hydraulikpumpe 34 verbunden sind. Die in ein Oberteil 36 des Stoßdämpfers hineingepumpte Hydraulikflüssigkeit bewirkt, daß sich der Dämpferkolben 30 senkt und somit die Gesamtlänge des Stoßdämpfers 18 verkürzt. Durch diese öldruckgesteuerte Verkürzung des Stoßdämpfers 18 wird der über die Lenkerfedern 2 und die Lenkerlager 3 schwenkbar mit den Trägern 4 verbundene Achskörper 1 nach oben in Richtung des Fahrzeugrahmens 5 bewegt.

Austretendes Lecköl gelangt über den Hydraulikkreislauf 35 in einen Ausgleichsbehälter 37, von wo aus das Öl über die Hydraulikpumpe 34 wieder zurück in den Stoßdämpfer 18 gepumpt wird.

Zum Absenken der Luftfederachse wird das 3/2-Wegeventil 33 wieder zurückgeschaltet wodurch auch im Dämpfersteuerventil 32 durch Federrückstellung die Drossel 31 wieder mit der Ober- und Unterseite des Dämpferkolbens 30 verbunden wird. Das Dämpfersteuerventil 32 kann sowohl Bestandteil des Stoßdämpfers 18 sein als auch als ein separates Bauteil ausgelegt werden.

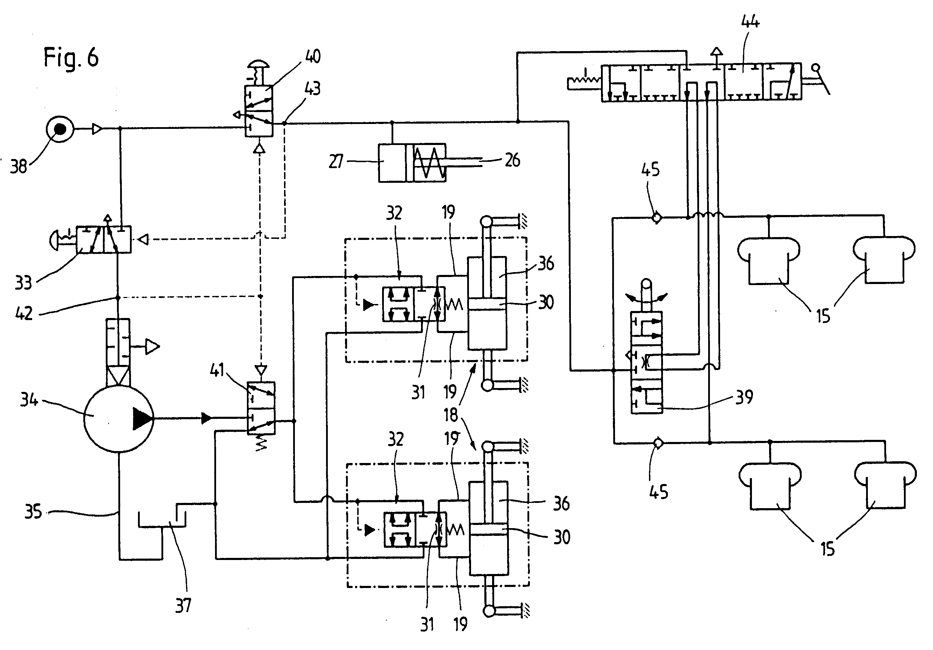

Das in Fig. 5 dargestellte Schaltschema für eine Luftfederanlage mit einem pneumatischen Zylinder funktioniert folgendermaßen:

Parallel zu dem Anheben bzw. Absenken des Achskörpers 1 mittels des Stoßdämpfers 18 müssen die mit einem Druckluftvorrat 38 verbundenen Luftfederbälge 15 entlüftet bzw. belüftet werden. Zur Steuerung der Druckluftzufuhr zu den Federbälgen 15 und dem Zylinder 27 ist zwischen einem Luftfederventil 39 ein 3/2-Wegeventil 40 geschaltet. Zum Absenken des angehobenen Achskörpers 1 wird das 3/2-Wegeventil 40 so geschaltet, daß die Druckluft aus dem Druckluftvorrat 38 die Luftfederbälge 15 und den Zylinder 27 belüftet.

Durch die Belüftung des Zylinders 27 wird die Kolbenstange 26 aus dem Zylinder 27 herausgedrückt, wodurch der Hebel 21 der Arretierungsvorrichtung 20 nach hinten schwenkt und den mit dem Achskörper 1 verbundenen Bügel 25 freigibt.

Das in Fig. 6 dargestellte Schaltschema für eine Luftfederanlage mit zwei hydraulisch längenverstellbaren Stoßdämpfern 18 stellt eine besonders vorteilhafte Ausführungsform einer erfindungsgemäßen Achsanhebevorrichtung dar und funktioniert folgendermaßen:

Bei diesem Schaltschema sind die beiden Kreisläufe zur Betätigung der Stoßdämpfer 18 sowie der Luftfederbälge 15 und des Zylinders 27 miteinander gekoppelt. Diese Kopplung der beiden Kreisläufe wird daduch bewerkstelligt, daß die Hydraulikpumpe 34 pneumatisch mittels Druckluft aus dem Druckluftvorrat 38 angetrieben wird. Die Kopplung der beiden Kreisläufe erfolgt über die beiden 3/2-Wegeventile 33 und 40 sowie ein weiteres 3/2-Wegeventil 41. Bei dieser Kopplung der Schaltkreisläufe ist das 3/2-Wegeventil 33 zwischen den Druckluftvorrat 38 und die Hydraulikpumpe 34 geschaltet.

Zur Betätigung der Achsanhebevorrichtung wird das 3/2-Wegeventil 33 so geschaltet, daß die Hydraulikpumpe 34 mit dem Druckluftvorrat 38 verbunden ist und die Hydrualikpumpe 34 durch die Druckluft angetrieben wird. Durch an einer Abzweigestelle 42 abzweigende Steuerluft werden das 3/2-Wegeventil 41 auf Durchlaß geschaltet und das 3/2-Wegeventil 40 ausgeschaltet.

Die Hydraulikpumpe 34 pumpt die Hydraulikflüssigkeit über das auf Durchlaß geschaltete 3/2-Wegeventil 41 zu den beiden Dämpfersteuerventilen 32 der Stoßdämpfer 18. Bedingt durch den Öldruck werden die Drosseln 31 ausgeschaltet und Ober- und Unterseiten der Dämpferkolben 30 mit dem Hydraulikkreislauf 35 der Hydraulikpumpe 34 verbunden. Die in die Oberteile 36 der Stoßdämpfer 18 einströmende Hydraulikflüssigkeit drückt die Dämpferkolben 30 herab und bewirkt somit eine Längenverkürzung der Stoßdämpfer 18 wodurch wiederum der Achskörper 1 angehoben wird.

Da durch die Schaltung des 3/2-Wegeventils 33 das 3/2-Wegeventil 40 ausgeschaltet wurde, besteht keine Verbindung zwischen dem Druckluftvorrat 38 und den Luftfederbälgen 15, so daß diese beim Anheben des Achskörpers 1 entlüftet werden können.

Zur Absenkung des Achskörpers 1 wird das 3/2-Wegeventil 40 auf Duchlaß geschaltet. Über eine Abzweigestelle 43 schaltet Steuerluft das 3/2-Wegeventil 33 aus. Die aus dem Druckluftvorrat 38 einströmende Druckluft gelangt in den Zylinder 27 und drückt die Kolbenstange 26 aus dem Zylinder 27 heraus. Über die ausfahrende Kolbenstange 26 wird die Arretierungsvorrichtung 20 gelöst und der Achskörper 1 freigegeben. Über das Luftfederventil 39 und ein Drehschieberventil 44 werden die Luftfederbälge 15 belüftet.

Um die Luftfederbälge 15 auch bei geschlossenem Luftfederventil 39 zuverlässig entlüften zu können, sind Rückschlagventile 45 zwischen die Luftfederbälge 15 und das Luftfederventil 39 geschaltet.

| **Bezugszeichenliste** | | | |
|---|---|---|---|
| 1 | Achskörper | 31 | Drossel |
| 2 | Lenkerfeder | 32 | Dämpfersteuerventil |
| 3 | Lenkerlager | 33 | 3/2-Wegeventil |
| 4 | Träger | 34 | Hydraulikpumpe |
| 5 | Fahrzeugrahmen | 35 | Hydraulikkreislauf |
| 6 | Bereifung | 36 | Oberteil |
| 7 | Achslappen | 37 | Ausgleichsbehälter |
| 8 | Federbügel | 38 | Druckluftvorrat |
| 9 | Spannschraube | 39 | Luftfederventil |
| 10 | Halterung | 40 | 3/2-Wegeventil |
| 11 | Bolzen | 41 | 3/2-Wegeventil |
| 12 | Haltevorrichtung | 42 | Abzweigestelle |
| 13 | Luftfederbalgträger | 43 | Abzweigestelle |
| 14a | Hebelarm | 44 | Drehschieberventil |
| 14b | Hebelarm | 45 | Rückschlagventil |
| 15 | Luftfederbalg | | |
| 16 | Bodenplatte | | |
| 17 | Kopfplatte | | |
| 18 | Stoßdämpfer | | |
| 19 | Anschluß | | |
| 20 | Arretierungsvorrichtung | | |
| 21 | Hebel | | |
| 22 | Schenkel | | |
| 23 | Schenkel | | |
| 24 | Schraubenfeder | | |
| 25 | Bügel | | |
| 26 | Kolbenstange | | |
| 27 | Zylinder | | |
| 28 | Langloch | | |
| 29 | Zapfen | | |
| 30 | Dämpferkolben | | |

## Patentansprüche

1. Achsanhebevorrichtung für Luftfederachsen mit Stoßdämpfern (18) für Anhänger,
**dadurch gekennzeichnet,**
daß wenigstens ein Stoßdämpfer (18) hydraulisch längenverstellbar ausgebildet und mit einem Dämpfersteuerventil (32) versehen ist.

2. Achsanhebevorrichtung nach Anspruch 1, dadurch gekennzeichnet, daß der Stoßdämpfer (18) über eine Hydraulikpumpe (34) mit Hydraulikflüssigkeit versorgt wird.

3. Achsanhebevorrichtung nach Anspruch 2, dadurch gekennzeichnet, daß die Hydraulikpumpe (34) pneumatisch angetrieben wird.

4. Achsanhebevorrichtung nach Anspruch 2, dadurch gekennzeichnet, daß zwischen Hydraulikpumpe (34) und Dämpfersteuerventil (32) ein Mehrwegeventil (33) geschaltet ist.

5. Achsanhebevorrichtung nach Anspruch 1, dadurch gekennzeichnet, daß an einem Fahrzeugrahmen (5) in der Mitte über einer anzuhebenden Achse (1) eine Arretierungsvorrichtung (20) in Fahrzeuglängsrichtung schwenkbar befestigt ist.

6. Achsanhebevorrichtung nach Anspruch 5, dadurch gekennzeichnet, daß die Arretierungsvorrichtung (20) aus einem mittig gelagerten Hebel (21) besteht, dessen zur Achse (1) weisender Schenkel (22) hakenförmig ausgestaltet ist und dessen nach oben weisender Schenkel (23) mittels einer in diesen Schenkel (23) eingehängten Schraubenfeder (24) am Fahrzeugrahmen (5) festgelegt ist.

7. Achsanhebevorrichtung nach Anspruch 6, dadurch gekennzeichnet, daß die Arretierungsvorrichtung (20) über eine mit einem Zylinder (27) verbundene Kolbenstange (26) schwenkbar ist.

8. Achsanhebevorrichtung nach Anspruch 7, dadurch gekennzeichnet, daß der Zylinder (27) zum Schwenken der Arretierungsvorrichtung (20) als pneumatisch betriebener Zylinder (27) ausgelegt ist.

9. Achsanhebevorrichtung nach Anspruch 7, dadurch gekennzeichnet, daß die Kolbenstange (26) an ihrem freien Ende ein Langloch (28) aufweist, in das ein an dem oberen Schenkel (23) des Hebels (21) angeformter Zapfen (29) eingreift.

10. Achsanhebevorrichtung nach Anspruch 5, dadurch gekennzeichnet, daß unterhalb der Arretierungsvorrichtung (20) ein U-förmiger Bügel (25) mit der geschlossenen Seite nach oben weisend an der Achse (1) befestigt ist.

11. Achsanhebevorrichtung nach Anspruch 1, dadurch gekennzeichnet, daß zwischen einem Druckluftvorrat (38) auf der einen Seite und Luftfederbälgen (15) und dem Zylinder (27) auf der anderen Seite ein Mehrwegeventil (40) geschaltet ist.

12. Achsanhebevorrichtung nach den Ansprüchen 3 und 11, dadurch gekennzeichnet, daß sowohl die Hydraulikpumpe (34) als auch die Luftfederbälge (15) und der Zylinder (27) an den Druckluftvorrat (38) angeschlossen sind.

13. Achsanhebevorrichtung nach Anspruch 12, dadurch gekennzeichnet, daß die Druckluftsysteme für die Hydraulikpumpe (34) und die Luftfederbälge (15) und den Zylinder (20) über die Mehrwegeventile (33,40) miteinander gekoppelt sind.

14. Achsanhebevorrichtung nach Anspruch 13, dadurch gekennzeichnet, daß die Mehrwegeventile (33,40) als 3/2-Wegeventile ausgebildet sind.
